# FASCICULE DE BREVET EUROPEEN

(11) **EP 3 856 585 B1**
(45) Date de publication et mention de la délivrance du brevet: **22.11.2023**
(21) Numéro de dépôt: 19772770.4
(22) Date de dépôt: 25.09.2019
(51) Int. Cl.: B60S 1/34, B60S 1/56, B60S 1/52

(54) **SYSTEME D'AIDE A LA CONDUITE D'UN VEHICULE AUTOMOBILE**
KRAFTFAHRZEUGFAHRERASSISTENZSYSTEM
MOTOR VEHICLE DRIVER ASSISTANCE SYSTEM

(30) Priorité: 28.09.2018 FR 1858955
(43) Date de publication de la demande: 04.08.2021
(73) Titulaire: Valeo Systèmes d'Essuyage, 78322 Le Mesnil Saint Denis (FR)
(72) Inventeur: TREBOUET, Marcel, 78322 Le Mesnil Saint Denis (FR)
(74) Mandataire: Valeo Visibility
(86) Numéro de dépôt international: PCT/EP2019/075942
(87) Numéro de publication internationale: WO 2020/064881

(56) Documents cités:
- WO-A1-2016/116568
- AU-A1- 2016 298 390
- DE-A1-102013 213 415
- US-A1- 2011 016 653
- US-A1- 2016 121 855

## Description

La présente invention concerne un système d'aide à la conduite d'un véhicule automobile, et plus particulièrement l'invention concerne un dispositif de nettoyage associé à un module de détection d'un tel système d'aide à la conduite.

Les véhicules, et particulièrement les véhicules automobiles, comprennent de plus en plus de systèmes automatisés, qui sont notamment des systèmes d'aide à la conduite. De tels systèmes d'aide à la conduite comprennent notamment un ou plusieurs module(s) de détection d'un environnement du véhicule et de paramètres externes à ce véhicule ainsi qu'au moins une unité de contrôle configurée pour interpréter les informations ainsi recueillies et pour prendre les décisions qui s'imposent en conséquence de ces informations.

Dès lors, on comprend qu'il est particulièrement important d'assurer le bon fonctionnement de ces modules de détection, tout au long de la vie du véhicule. Notamment, ces modules de détection sont, le plus souvent, agencés à l'extérieur du véhicule, par exemple portés par la carrosserie de ce véhicule, et peuvent par exemple être salis, ce qui peut rendre difficile, voire impossible, l'acquisition d'informations par ces modules de détection. Il faut donc prévoir un système de nettoyage capable de retirer efficacement les détritus, salissures, éléments organiques et autres éléments perturbateurs. Une solution est de projeter du liquide en grande quantité puis de sécher une surface optique du module de détection concerné, mais une telle solution est coûteuse en liquide lave glace, ou en eau, d'autant plus dans le cas de véhicule autonome où de nombreux modules de détection sont mis en oeuvre sur le pourtour du véhicule.

De plus, de par leur position à l'extérieur du véhicule, ces modules de détection peuvent être endommagés en cas de chocs. Même à faible vitesse, de tels chocs peuvent entrainer des dommages irréversibles sur ces modules de détection. Le document US 2016/121855 A1 divulgue le préambule de la revendication 1.

La présente invention s'inscrit dans ce contexte et vise à résoudre au moins les inconvénients qui viennent d'être cités.

Un objet de la présente invention concerne ainsi un système d'aide à la conduite d'un véhicule automobile, comprenant au moins un module de détection et un dispositif de nettoyage, le module de détection comprenant au moins un capteur d'aide à la conduite et au moins une vitre de protection fermant le module de détection et protégeant l'au moins un capteur d'aide à la conduite, le dispositif de nettoyage étant configuré pour nettoyer la vitre de protection et le dispositif de nettoyage comprenant au moins un balai d'essuyage au contact de la vitre de protection et mobile le long d'une direction principale de déplacement rectiligne.

La vitre de protection est ainsi configurée pour, notamment, protéger l'au moins un capteur d'aide à la conduite d'éventuelles agressions extérieures qui pourraient l'endommager de manière irréversible. Ainsi, cette vitre de protection est agencée en regard de cet au moins un capteur d'aide à la conduite, c'est-à-dire entre le capteur d'aide à la conduite et la scène de route sur lequel circule le véhicule auquel est destiné le système d'aide à la conduite selon l'invention.

On entend par « direction principale de déplacement rectiligne » le fait que le balai d'essuyage effectue un mouvement de déplacement, notamment de va-et-vient, le long d'une droite lorsque la vitre de protection est plane, ou bien le long d'une direction suivant un galbe de cette vitre de protection dans un plan transversal et perpendiculaire, ou sensiblement perpendiculaire, à un plan d'extension principal de la vitre de protection.

L'utilisation d'un dispositif de nettoyage mécanique, c'est-à-dire d'un dispositif de nettoyage qui comprend un balai d'essuyage agencé au contact de la surface à nettoyer - en l'espèce de la vitre de protection - permet d'optimiser une consommation d'un fluide lave-glace. On comprend en effet que c'est notamment grâce au frottement du balai d'essuyage sur la vitre de protection que s'effectue le nettoyage de cette vitre de protection et qu'une projection de fluide lave-glace vient alors en complément, par exemple lorsque le seul frottement du balai d'essuyage contre la vitre de protection s'avère insuffisant pour la nettoyer totalement.

De plus, le fait que le balai d'essuyage soit en contact avec la vitre de protection, c'est-à-dire avec une surface distincte d'une surface optique de l'au moins un capteur d'aide à la conduite, permet de s'assurer que le frottement du balai d'essuyage ne raye pas cette surface optique du capteur d'aide à la conduite. Avantageusement on comprend qu'en cas de rayure de cette vitre de protection, ou d'impact endommageant ou brisant totalement la vitre de protection, cette dernière est plus aisée et moins chère à remplacer que l'au moins un capteur d'aide à la conduite en lui-même.

Selon une caractéristique de la présente invention, le balai d'essuyage comprend au moins un conduit de distribution d'un fluide lave-glace configuré pour être relié à un réservoir du fluide lave-glace. Au moins une buse de projection de ce fluide lave-glace peut être prévue sur le conduit de distribution du fluide lave-glace. Avantageusement, l'utilisation d'un tel balai d'essuyage permet de mieux cibler la projection de fluide lave-glace, c'est-à-dire de projeter ce fluide lave-glace au plus près du balai d'essuyage ce qui permet d'améliorer l'efficacité de ce nettoyage, tout en optimisant la quantité de fluide lave-glace nécessaire. Autrement dit, l'utilisation d'un balai d'essuyage intégrant un tel conduit de distribution et équipé de buses de projection permet de réduire, encore, la quantité de fluide lave-glace nécessaire à chaque lavage, et par conséquent de réduire la taille du réservoir contenant ce fluide lave-glace, et donc de diminuer le poids total du véhicule sur lequel est intégré un tel système d'aide à la conduite.

Alternativement, le système d'aide à la conduite peut comprendre une buse de projection du fluide lave-glace distincte du balai d'essuyage, c'est-à-dire agencée à une distance non nulle de ce balai d'essuyage. Par exemple, cette buse de projection peut être escamotable, c'est-à-dire qu'elle peut prendre au moins une première position dans laquelle elle est apte à projeter le fluide lave-glace et une deuxième position dans laquelle elle est escamotée et donc incapable de projeter le fluide lave-glace.

Selon une caractéristique de la présente invention, la vitre de protection comprend au moins une face intérieure tournée vers l'au moins un capteur d'aide à la conduite, cette face intérieure comprenant un revêtement antireflet.

Selon une caractéristique de la présente invention, la vitre de protection peut présenter un galbe identique, ou sensiblement identique, à un galbe de l'au moins un capteur d'aide à la conduite.

Selon le système d'aide à la conduite selon la présente invention, le module de détection comprend au moins un premier capteur d'aide à la conduite et au moins un deuxième capteur d'aide à la conduite, la vitre de protection protégeant à la fois le premier capteur d'aide à la conduite et le deuxième capteur d'aide à la conduite.

Afin que la vitre de protection puisse protéger à la fois le premier capteur d'aide à la conduite et le deuxième capteur d'aide à la conduite, on comprend que ce premier capteur d'aide à la conduite et ce deuxième capteur d'aide à la conduite sont agencés au voisinage l'un de l'autre. Par exemple, le premier capteur d'aide à la conduite et le deuxième capteur d'aide à la conduite sont agencés l'un après l'autre le long d'une direction transversale.

Avantageusement, le premier capteur d'aide à la conduite et le deuxième capteur d'aide à la conduite peuvent participer, conjointement, à la détection d'évènement(s) sur une scène de route. Par exemple, les moyens mis en oeuvre, respectivement, par ce premier capteur et par ce deuxième capteur sont complémentaires. Tel que cela sera plus amplement détaillé ci-dessous, le premier capteur d'aide à la conduite peut par exemple être un capteur à grande portée, configuré pour faire de la reconstitution d'images suite à une émission/réception d'ondes et le deuxième capteur d'aide à la conduite peut par exemple être un dispositif d'acquisition directe d'images, par exemple une caméra de vision grand angle. Ainsi, la combinaison des informations recueillies par le premier capteur d'aide à la conduite et par le deuxième capteur d'aide à la conduite sont combinées de sorte à obtenir une information complète de la scène de route en question.

Avantageusement, l'utilisation de deux capteurs d'aide à la conduite complémentaires permet en outre de pallier un potentiel défaut de l'un ou l'autre de ces capteurs d'aide à la conduite, étant toutefois entendu qu'en cas de défaut de l'un de ces capteurs d'aide à la conduite, l'information concernant la scène de route concernée peut être dégradée.

Selon l'invention, la vitre de protection peut comprendre au moins une première portion qui protège le premier capteur d'aide à la conduite et au moins une deuxième portion qui protège le deuxième capteur d'aide à la conduite, le dispositif de nettoyage étant configuré pour nettoyer la première portion de la vitre de protection et la deuxième portion de la vitre de protection. Autrement dit, on comprend que le balai d'essuyage est configuré pour essuyer l'ensemble d'une surface de la vitre de protection. Selon l'invention, la vitre de protection est monobloc, c'est-à-dire que la première portion de cette vitre de protection et la deuxième portion de cette vitre de protection forment un unique ensemble qui ne peut être séparé sans entrainer la détérioration de l'une ou de l'autre de ces portions. Par exemple, la première portion et la deuxième portion de cette vitre de protection peuvent être agencées l'une après l'autre le long d'une direction parallèle à la direction transversale le long de laquelle sont alignés le premier capteur d'aide à la conduite et le deuxième capteur d'aide à la conduite.

Selon l'invention, la direction de déplacement principale rectiligne du balai d'essuyage est également parallèle à la direction transversale d'alignement des capteurs d'aide à la conduite et, par conséquent, également parallèle à la direction d'alignement de la première portion et de la deuxième portion de la vitre de protection.

Le dispositif de nettoyage est configuré pour nettoyer alternativement la première portion de la vitre de protection et la deuxième portion de cette vitre de protection. Tel qu'évoqué ci-dessus, le premier capteur d'aide à la conduite et le deuxième capteur d'aide à la conduite participent tous deux à l'acquisition d'images de la même scène de route de sorte qu'il suffit qu'un seul d'entre eux soit fonctionnel pour que la détection puisse avoir lieu. Ainsi, la présente invention permet un nettoyage de l'un ou de l'autre, tout en conservant, au moins partiellement, la fonction associée d'analyse de la scène de route.

Par exemple, le premier capteur d'aide à la conduite peut être un organe de détection par émission d'ondes. On entend ici par « organe de détection par émission d'ondes » un organe configuré pour déterminer une distance le séparant d'un objet quelconque en émettant au moins une onde et en mesurant le délai de retour de cette onde. Autrement dit, la distance est calculée par la mesure du délai entre l'émission de l'onde et la détection d'une réflexion de cette onde par l'objet concerné. Ainsi, à partir du délai mesuré et de la vitesse théorique de propagation de l'onde, l'organe de détection est configuré pour déterminer la distance le séparant de l'objet sur lequel l'onde a été réfléchie. Dans la description les termes « organe de détection » et « organe de détection par émission d'ondes » sont utilisés sans distinction.

La vitre de protection agencée en amont de cet organe de détection est agencée sur un trajet emprunté par les ondes émises par l'organe de détection, la vitre de protection étant perméable au moins aux longueurs d'ondes émises par l'organe de détection. Avantageusement, on comprend qu'une telle vitre de protection est plus facile à nettoyer qu'une surface optique de l'organe de détection.

La vitre de protection est traitée, d'une part pour ne pas réfléchir ces ondes émises par l'organe de détection, et d'autre part pour permettre le passage de ces ondes, dans les deux sens, c'est-à-dire de l'organe de détection vers l'extérieur du véhicule et de l'extérieur du véhicule vers l'organe de détection, de sorte à ce qu'il puisse, tel que mentionné ci-dessus, calculer le délai avec lequel ces ondes sont réfléchies. Par exemple ces ondes peuvent être des ondes lumineuses, ou radioélectriques, ou encore sonores.

Tel qu'évoqué ci-dessus, la vitre de protection peut présenter un galbe identique, ou sensiblement identique, à un galbe du premier capteur d'aide à la conduite. Par exemple, lorsque les ondes émises par l'organe de détection sont des ondes lumineuses, cet organe de détection peut comprendre au moins une lentille galbée configurée pour mettre en forme un faisceau lumineux. La vitre de protection peut alors présenter un galbe identique, ou sensiblement identique au galbe de cette lentille. L'utilisation d'une vitre de protection parfaitement adaptée à ce galbe permet notamment d'éviter que les faisceaux lumineux émis par l'organe de détection ne soient réfléchis. Avantageusement, cela permet également de réduire l'encombrement total du système d'aide à la conduite selon l'invention, ce qui facilite par exemple son implantation sur le véhicule auquel il est destiné. Il est entendu que selon cette caractéristique de la présente invention, le dispositif de nettoyage destiné au nettoyage de la vitre de protection, et plus particulièrement le balai d'essuyage de ce dispositif de nettoyage, est configuré pour suivre le gable de la vitre de protection.

Selon une autre caractéristique de la présente invention, le deuxième capteur d'aide à la conduite peut être une caméra.

La présente invention concerne également un véhicule automobile, comprenant au moins un système d'aide à la conduite selon l'invention.

La présente invention concerne aussi un procédé de nettoyage d'un système d'aide à la conduite selon l'invention, comprenant au moins une étape au cours de laquelle au moins un capteur d'aide à la conduite détecte la présence d'un élément perturbateur sur la vitre de protection, une étape au cours de laquelle l'au moins un capteur d'aide à la conduite envoie une première information correspondante à une unité de contrôle, et une étape au cours de laquelle l'unité de contrôle envoie une première instruction permettant au dispositif de nettoyage de nettoyer la vitre de protection. On entend ici par « nettoyer la vitre de protection », l'ensemble des étapes qui permettent ce nettoyage, c'est-à-dire la projection du fluide lave-glace sur la vitre de protection et/ou la mise en mouvement du balai d'essuyage permettant l'essuyage de cette vitre de protection. On entend en outre par « élément perturbateur » tous types de dépôts pouvant s'accumuler sur la vitre de protection et qui perturbent l'acquisition d'une image fidèle de la scène de route analysée. Par exemple cet élément perturbateur peut être une salissure, ou un élément organique.

L'étape de détection de l'élément perturbateur, qu'il s'agisse d'une salissure ou de tout autre type de dépôt gênant l'acquisition d'images, peut par exemple être réalisée par le capteur d'aide à la conduite lui-même ou bien par une unité de commande configurée pour traiter l'image acquise par ce capteur d'aide à la conduite.

L'invention concerne enfin un procédé comprenant au moins une étape au cours de laquelle une unité de contrôle reçoit une première information envoyée par le premier capteur d'aide à la conduite ou une deuxième information envoyée par le deuxième capteur d'aide à la conduite, cette première information ou cette deuxième information concernant, respectivement, la présence d'un élément perturbateur sur la première portion de la vitre de protection ou sur la deuxième portion de la vitre de protection, et une étape au cours de laquelle l'unité de contrôle envoie une première instruction permettant au dispositif de nettoyage de nettoyer la première portion de la vitre de protection si elle a reçu la première information envoyée par le premier capteur d'aide à la conduite ou une deuxième instruction permettant au dispositif de nettoyage de nettoyer la deuxième portion de la vitre de protection si elle a reçu la deuxième information envoyée par le deuxième capteur d'aide à la conduite.

Avantageusement, on comprend que selon ce procédé, les portions de la vitre de protection sont nettoyées alternativement de sorte qu'au moins l'un des deux capteurs d'aide à la conduite puisse fonctionner.

D'autres caractéristiques détails et avantages ressortiront plus clairement à la lecture de la description détaillée données ci-après à titre indicatif en relation avec un exemple de réalisation de la présente invention illustré sur les figures suivantes :
- la figure 1 représente schématiquement un véhicule automobile, vue de dessus, selon la présente invention intégrant plusieurs systèmes d'aide à la conduite, dont au moins un selon la présente invention ;
- la figure 2 représente schématiquement une coupe transversale, vue de dessus, du système d'aide à la conduite selon l'invention, ce système d'aide à la conduite comprenant au moins un module de détection et un dispositif de nettoyage ;

- la figure 3 illustre, en perspective, le système d'aide à la conduite selon l'invention qui comprend le module de détection et le dispositif de nettoyage dédié à ce module de détection ;
- la figure 4 est une vue en coupe transversale du dispositif de nettoyage mis en place dans le système d'aide à la conduite selon l'invention ;
- la figure 5 illustre, sous forme synoptique, un procédé de nettoyage du système d'aide à la conduite selon l'invention.

Dans la suite de la description les termes « longitudinal », « transversal » et « vertical » se réfèrent à une orientation d'un système d'aide à la conduite 100 selon l'invention lorsque celui-ci est intégré à un véhicule. Ainsi, le terme « longitudinal » correspond à une direction parallèle à un axe longitudinal L d'un trièdre L, V, T représenté sur les figures, le terme « transversal » correspond à une direction parallèle à un axe transversal T de ce trièdre, l'axe transversal étant perpendiculaire à l'axe longitudinal L et le terme « vertical » correspond à une direction parallèle à un axe vertical V du trièdre, cet axe vertical V étant perpendiculaire à l'axe longitudinal L et à l'axe transversal T. Une coupe transversale fait référence à une coupe réalisée selon un plan longitudinal et transversal, c'est-à-dire un plan dans lequel s'inscrivent l'axe longitudinal L et l'axe transversal T du trièdre L, V, T illustré.

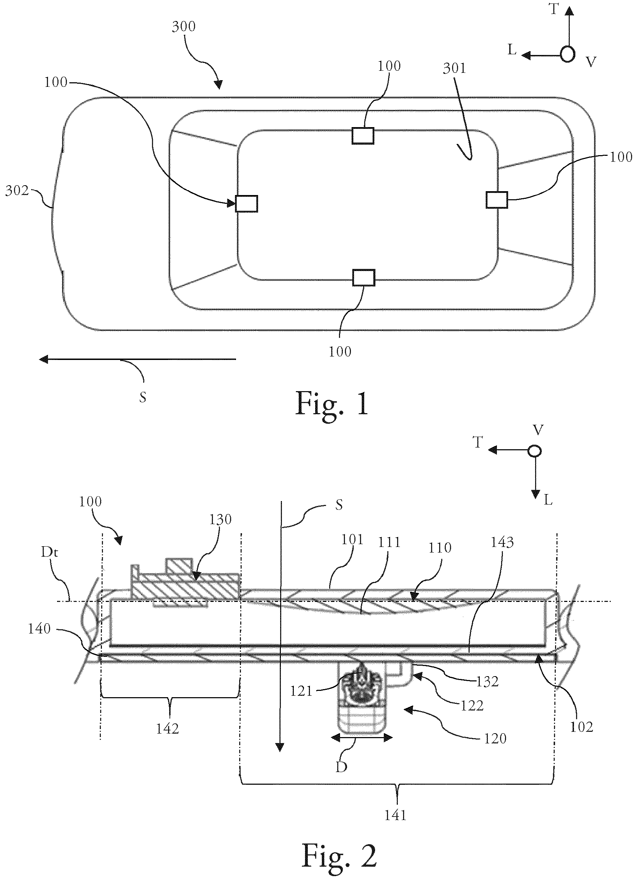

La figure 1 est une vue, de dessus, d'un véhicule automobile 300 comprenant au moins un système d'aide à la conduite 100 selon l'invention. Plus particulièrement, selon l'exemple illustré ici, le véhicule automobile 300 comprend une pluralité de systèmes d'aide à la conduite 100, dont au moins un est réalisé selon l'invention. Tel qu'illustré, ces systèmes d'aide à la conduite sont agencés sur les bords d'un toit 301 du véhicule automobile 300 mais d'autres emplacements pourraient être envisagés. En l'espèce, le véhicule automobile 300 représenté comprend un système d'aide à la conduite 100 agencé à l'avant du véhicule 300, un système d'aide à la conduite 100 agencé à l'arrière du véhicule et deux systèmes d'aide à la conduite 100 agencés latéralement sur le véhicule 300. Ainsi, des données peuvent être acquises sur l'ensemble d'un environnement du véhicule automobile 300, c'est-à-dire à 360° autour de ce véhicule automobile 300. Les termes « avant » et « arrière » du véhicule 300 s'entendent ici par rapport à un sens S de déplacement principal de ce véhicule 300.

Nous allons maintenant décrire plus en détails l'un de ces systèmes d'aide à la conduite 100, et plus particulièrement un système d'aide à la conduite 100 réalisé selon l'invention, étant entendu que l'ensemble des systèmes d'aide à la conduite 100 représentés sur la figure 1 peuvent être réalisés selon l'invention ou bien seulement certains d'entre eux, sans sortir du contexte de l'invention.

L a figure 2 est une représentation d'une coupe transversale du système d'aide à la conduite 100 selon l'invention. Ce système d'aide à la conduite 100 comprend notamment un module de détection 101 et au moins un dispositif de nettoyage 120. Tel que représenté, le module de détection 101 loge au moins un capteur d'aide à la conduite 110, 130 et est fermé, en partie, par une vitre de protection 140 de cet au moins un capteur d'aide à la conduite 110, 130. On entend par « capteur d'aide à la conduite », un organe configuré pour acquérir des données relatives à un environnement extérieur au véhicule auquel est destiné le système d'aide à la conduite 100 selon l'invention et pour transmettre les données ainsi acquises à une unité de contrôle quant à elle configurée pour envoyer, en conséquence de ces informations reçues, une ou plusieurs instructions permettant d'enclencher ou d'assister une manoeuvre du véhicule.

Plus particulièrement, selon l'exemple illustré ici, un premier capteur d'aide à la conduite est un organe de détection 110 par émission d'ondes, par exemple électromagnétiques, c'est-à-dire que cet organe de détection 110 est configuré pour évaluer une distance le séparant d'un objet quelconque en mesurant un délai entre un instant t auquel il envoie une onde et un instant t1 auquel cette onde est réfléchie. Ainsi, cet organe de détection 110 comprend au moins un organe émetteur configuré pour émettre au moins une onde et au moins un organe récepteur configuré pour recevoir l'onde réfléchie. Sur les dessins, l'organe de détection 110 est représenté de façon schématique, de sorte que ni l'organe émetteur, ni l'organe récepteur ne sont visibles.

Selon différents exemples de réalisation de la présente invention ces ondes peuvent être des ondes radioélectriques, auquel cas l'organe de détection est appelé RADAR de l'acronyme anglo-saxon « RAdio Détection And Ranging », ou bien des ondes lumineuses, par exemple un faisceau laser, auquel cas l'organe de détection est appelé LIDAR de l'acronyme anglo-saxon « LIght Detection And Ranging ». Selon l'exemple illustré sur la figure 2, le premier capteur d'aide à la conduite est un capteur LIDAR, c'est-à-dire qu'il émet des ondes lumineuses et il comprend ainsi au moins une lentille 111 galbée, configurée pour mettre en forme ces ondes lumineuses.

Il est entendu qu'il ne s'agit que d'exemples de réalisation de la présente invention et que le premier capteur d'aide à la conduite pourrait être formé par un organe différent sans sortir du contexte de la présente invention.

Par exemple, le système d'aide à la conduite 100 selon l'invention peut être destiné à être intégré sur un véhicule autonome, ou partiellement autonome. On comprend donc que cet organe de détection 110 doit pouvoir fonctionner de façon optimale en toutes circonstances. Afin d'optimiser l'acquisition d'images par le système d'aide à la conduite 100 selon l'invention, le module de détection 10 1 peut en outre loger un deuxième capteur d'aide à la conduite 130 configuré pour analyser sensiblement la même scène de route que l'organe de détection 110. Selon l'exemple illustré, ce deuxième capteur d'aide à la conduite 130 est agencé au voisinage de l'organe de détection 110, et plus particulièrement le premier capteur d'aide à la conduite 110 et le deuxième capteur d'aide à la conduite 130 sont alignés le long d'une direction transversale Dt. Selon l'exemple illustré ici, ce deuxième capteur d'aide à la conduite est une caméra 130.

Autrement dit, on comprend que le premier capteur d'aide à la conduite 110 et le deuxième capteur d'aide à la conduite 130 sont tous deux dédiés à l'acquisition de données concernant une même scène de route, ici située à l'avant du véhicule, le premier capteur d'aide à la conduite 110 permettant une reconstitution d'images et le deuxième capteur d'aide à la conduite 130 permettant quant à lui une acquisition directe d'images. Il est entendu qu'il ne s'agit que d'un exemple et que le système d'aide à la conduite 100 selon l'invention est apte à être positionné n'importe où sur le véhicule.

Avantageusement, la vitre de protection 140 est agencée en regard du module de détection, et plus particulièrement ici en amont du module de détection 10 1 par rapport au sens S de déplacement du véhicule automobile, de sorte qu'elle est configurée pour protéger ce module de détection, notamment contre d'éventuelles agressions extérieures, par exemple contre la projection de gravillons, ou autres objets qui peuvent être présents sur la route.

Tel que représenté, le module de détection 10 1 comprend également une zone de réception 102 dans laquelle la vitre de protection 140 est enchâssée, c'est-à-dire que cette vitre de protection 140 ferme, au moins partiellement, ce module de détection 101. Ainsi, cette vitre de protection 140 est agencée sur un trajet emprunté par les ondes émises par l'organe de détection 110. On comprend donc que cette vitre de protection 140 doit impérativement être traitée pour assurer le bon fonctionnement de cet organe de détection 110. Ainsi, selon l'invention, la vitre de protection 140 est d'une part réalisée en un matériau qui laisse passer les longueurs d'onde des ondes émises par l'organe de détection 110, ou traitée en ce sens, et d'autre part un traitement antireflet est appliqué sur cette vitre de protection 140 de sorte que les ondes émises par l'organe de détection 110 traversent totalement cette vitre de protection 140. Plus précisément, on comprend que le traitement antireflet est appliqué sur une face intérieure 143 de la vitre de protection 140, c'est-à-dire sur une face de cette vitre de protection 140 tournée vers l'organe de détection 110. Selon l'exemple illustré ici, cette vitre de protection 140 s'étend dans un plan mais on pourra également prévoir que cette vitre de protection soit galbée, et avantageusement qu'elle présente un galbe identique, ou sensiblement identique, au galbe de la lentille 111 de l'organe de détection 110 le cas échéant.

En outre, la vitre de protection 140 peut être artificiellement divisée en une première portion 141 destinée à protéger l'organe de détection 110 et une deuxième portion 142 destinée à protéger la caméra 130. On entend par « artificiellement divisée » le fait que la vitre de protection 140 est monobloc, c'est-à-dire que la première portion 141 et la deuxième portion 142 de cette vitre de protection 140 forment un unique ensemble qui ne peut être séparé sans entrainer la détérioration de l'une ou l'autre de ces portions 141, 142. On note également que la première portion 141 et la deuxième portion 142 de la vitre de protection 140 sont avantageusement alignées le long d'un axe parallèle à la droite transversale Dt le long de laquelle sont alignés l'organe de détection 110 et la caméra 130.

Tel qu'évoqué ci-dessus, le système d'aide à la conduite 100 selon l'invention comprend au moins un dispositif de nettoyage 120 dédié au nettoyage de la vitre de protection 140. Dans le contexte de ce qui a été décrit précédemment, le dispositif de nettoyage 120 est configuré pour nettoyer alternativement l'une ou l'autre des portions 141, 142 de la vitre de protection 140. Avantageusement, on comprend que cela permet d'assurer que l'organe de détection 110 et la caméra 130 ne soient pas aveuglés simultanément, c'est-à-dire d'assurer que la fonction de détection de la scène de route située à l'avant du véhicule est maintenue en permanence, au moins dans une forme dégradée. Selon l'invention, on comprend que ce dispositif de nettoyage 120 permet ainsi d'assurer, de façon durable, la fonction d'acquisition des données réalisée par les capteurs d'aide à la conduite 110, 130 du module de détection 101.

Ce dispositif de nettoyage 120 comprend notamment un balai d'essuyage 121 monté mobile par rapport à la vitre de protection 140 et agencé en contact avec cette vitre de protection 140. Tel que schématiquement représenté sur la figure 2, ce balai d'essuyage 121 est mobile le long d'une direction D principale de déplacement rectiligne. Selon l'exemple illustré ici dans lequel la vitre de protection 140 a un profil plan, cette direction D suit une droite pure, qui s'inscrit dans un plan d'extension principal de la vitre de protection 140. Autrement dit, cette direction D principale de déplacement rectiligne est parallèle à la direction transversale Dt d'alignement des capteurs d'aide à la conduite 110, 130, c'est-à-dire également parallèle à l'axe d'alignement des deux portions 141, 142 de la vitre de protection 140.

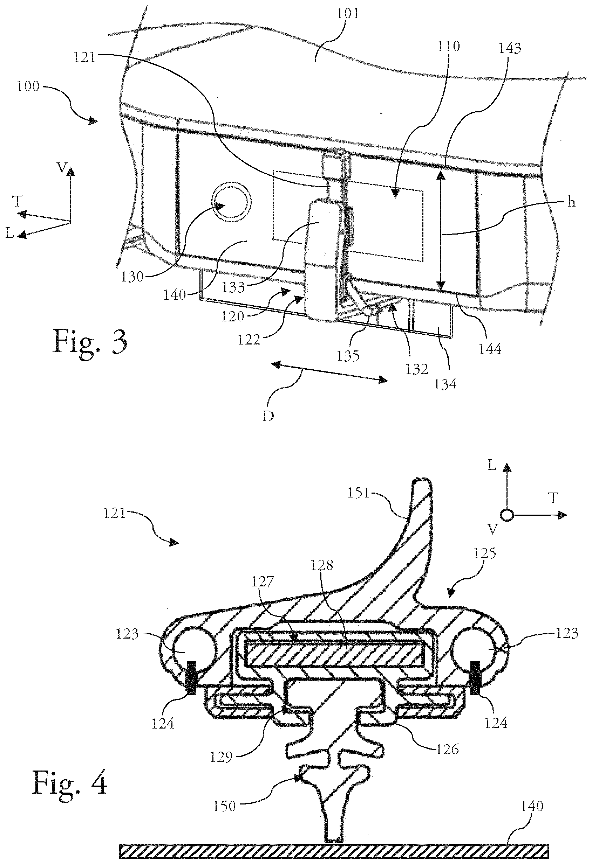

En référence à la figure 3 qui est une vue en perspective du système d'aide à la conduite 100 selon l'invention, nous allons maintenant décrire plus en détails le dispositif de nettoyage 120.

Le dispositif de nettoyage 120 comprend, outre le balai d'essuyage 121, un bras d'entrainement 122 mobile par rapport à la vitre de protection 140, et configuré pour entrainer dans son mouvement le balai d'essuyage 121. Tel que représenté sur la figure 3, ce bras d'entrainement 122 comprend une partie de guidage 132 qui s'étend au moins partiellement sous le module de détection 101 du système d'aide à la conduite 100 selon l'invention et au moins un connecteur 133 qui relie cette partie de guidage 132 au balai d'essuyage 121. Selon l'exemple illustré ici, la partie de guidage 132 comporte un chariot configuré pour coulisser dans un rail 134, représenté schématiquement sur la figure 3 sous le module de détection 101, le chariot étant mis en mouvement dans le rail par une courroie entrainée par un actionneur non illustrés ici. Cette partie de guidage 132 forme ainsi une portion mobile du bras d'entrainement 122 apte à entrainer le balai d'essuyage 121 le long de la direction D principale de déplacement rectiligne, via le connecteur 133 qui participe à transmettre le mouvement du bras d'entrainement 122 au balai d'essuyage 121.

Il est entendu que le balai d'essuyage 121 est apte à se déplacer selon deux sens opposés le long de cette direction D principale de déplacement rectiligne. Ainsi, selon un exemple particulier de réalisation de la présente invention, une position de repos du balai d'essuyage 121 correspond à un positionnement de ce balai d'essuyage 121 au niveau d'une jonction - virtuelle - entre la première portion 141 de la vitre de protection 140 et la deuxième portion 142 de cette vitre de protection 140. Ainsi, en fonction de la portion qui nécessite un nettoyage, le balai d'essuyage 121 pourra nettoyer sélectivement l'une ou l'autre de ces portions sans gêner l'acquisition d'images réalisée par le capteur d'aide à la conduite 110, 130 agencé derrière la portion de la vitre de protection 140 qui ne nécessite pas de nettoyage.

De plus, selon l'exemple illustré sur la figure 3, le dispositif de nettoyage 120 comprend également une arrivée 135 de fluide lave-glace. Ce fluide lave-glace est ainsi, selon l'exemple illustré ici, directement injecté dans des canaux de distribution de ce fluide lave-glace qui peuvent par exemple être ménagés à l'intérieur de balai d'essuyage 121, ou en surface de ce dernier.

Il est entendu qu'il ne s'agit que d'un exemple de réalisation, et que le bras d'entrainement 122 du dispositif de nettoyage 120 peut prendre une autre forme sans sortir du contexte de l'invention dans la mesure où il permet un déplacement du balai d'essuyage 121 le long de la direction D principale de déplacement rectiligne.

On note par ailleurs que le balai d'essuyage 121 s'étend sur toute une hauteur h de la vitre de protection 140, c'est-à-dire une dimension de cette vitre de protection 140 mesurée parallèlement à l'axe vertical V du trièdre, c'est-à-dire perpendiculairement à la direction D principale de déplacement du balai d'essuyage 121, entre deux bords 143, 144 délimitant cette vitre de protection 140 verticalement. Autrement dit, le balai d'essuyage 121 est en contact avec l'intégralité de la vitre de protection 140 sur sa dimension verticale, de sorte à assurer un nettoyage complet de la surface de cette vitre de protection 140 lorsque le balai est déplacé longitudinalement d'une extrémité à l'autre de la vitre de protection. Plus particulièrement, et tel que cela sera plus amplement détaillé ci-dessous, le balai d'essuyage 121 comprend une lame d'essuyage et c'est cette lame d'essuyage qui est effectivement plaquée contre la vitre de protection et qui essuie cette dernière. Selon l'invention, le plaquage de cette lame d'essuyage est par exemple réalisé grâce à un ou plusieurs dispositif(s) de rappel élastique, ou alors grâce à un effet de rappel élastique propre à cette lame d'essuyage.

Avantageusement, lorsque la vitre de protection 140 est galbée, on pourra prévoir que le balai d'essuyage suive ce galbe de sorte à assurer un essuyage optimal de cette vitre de protection 140.

La figure 4 illustre un exemple de réalisation du balai d'essuyage 121 de ce dispositif de nettoyage 120. Ce balai d'essuyage 121 s'étend principalement selon une direction verticale, c'est-à-dire une direction parallèle au plan d'extension principal de la vitre de protection 140 et perpendiculaire à la direction D de déplacement principale rectiligne du balai d'essuyage 121. Tel que représenté, ce balai d'essuyage 121 comprend au moins un conduit 123 de distribution d'un fluide lave-glace, avantageusement deux conduits 123 de distribution du fluide lave-glace, munis d'orifice de projection de fluide lave-glace. On peut prévoir une ou des buse(s) de projection 124 du fluide lave-glace associée(s) au conduit 123 de distribution du fluide lave-glace pour une projection de fluide optimisée. Par exemple, ces conduits 123 de distribution peuvent s'étendre sur toute une longueur du balai d'essuyage 121, c'est-à-dire le long de la direction verticale. Avantageusement, le balai d'essuyage 121 comprend une pluralité de buses de projection 124, réparties sur toute une longueur du/de(s) conduit(s) 123 de distribution. Plus précisément, les conduits 123 de distribution du fluide lave-glace sont ménagés dans un accessoire 125 du balai d'essuyage 121. Tel que représenté, cet accessoire 125 est monté sur un support 126 qui comprend un logement 127 configuré pour recevoir une vertèbre 128 de rigidification du balai d'essuyage 121, et au moins un espace 129 configuré pour recevoir une lame d'essuyage 150 destinée à être plaquée, notamment grâce à la vertèbre 128, contre la vitre de protection 140 à nettoyer. Optionnellement, l'accessoire 125 peut également comprendre un déflecteur d'air 151 qui participe alors également au plaquage de la lame d'essuyage contre la vitre de protection.

Bien que non illustré ici, le(s) conduit(s) 123 de distribution du fluide lave-glace est/ sont en outre fluidiquement relié à un réservoir de fluide lave-glace.

On comprend de ce qui précède que le dispositif de nettoyage 120 met en oeuvre un essuyage mécanique de la vitre de protection 140, par frottement, de sorte que les quantités de fluide lave-glace nécessaires à cet essuyage sont réduites, permettant ainsi de réduire la taille du réservoir de stockage de ce fluide lave-glace et donc le poids total du système de détection 100 selon l'invention. Le fait que le(s) conduit(s) 123 de distribution du fluide lave-glace et les buses de projection 124 soient ménagés directement sur le balai d'essuyage 121 participe également, avec l'utilisation d'un essuyage mécanique, à la réduction de la quantité de fluide lave-glace utilisée. Toutefois, on pourra également prévoir que les buses de projection soient agencées à une distance non nulle du balai d'essuyage sans sortir du contexte de la présente invention.

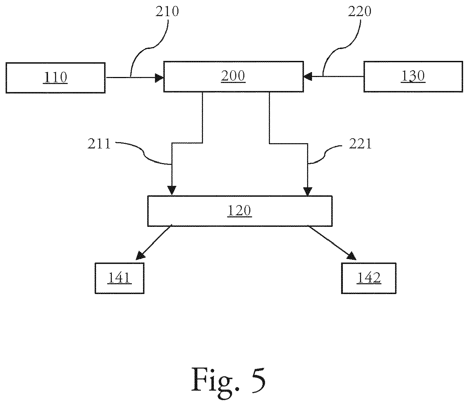

La figure 5 illustre quant à elle un exemple d'un procédé de nettoyage du système d'aide à la conduite selon l'invention. Tel qu'illustré, lorsque l'organe de détection 110 ou la caméra 130 détecte la présence d'un élément perturbateur, respectivement, dans son champ de vision ou sur le trajet des ondes qu'il émet, l'organe de détection 110 ou la caméra 130 envoie, respectivement, une première information 210 ou une deuxième information 220 correspondante à une unité de contrôle 200. Cette unité de contrôle 200 est alors configurée pour envoyer, selon qu'elle ait reçue la première information 210 ou la deuxième information 220, une première instruction 211 permettant un nettoyage de la première portion 141 de la vitre de protection 140 ou une deuxième instruction 221 permettant de nettoyer la deuxième portion 142 de cette vitre de protection 140.

On entend ici par « élément perturbateur » un élément qui gêne, voire empêche, l'acquisition d'informations par l'un ou l'autre des capteurs d'aide à la conduite 110, 130. Ainsi, cet élément perturbateur peur par exemple être une salissure, un élément organique, ou tout autre détritus qui pourra se déposer sur la vitre de protection 140.

La première instruction 211 peut être divisée en deux sous-instructions : une première sous-instruction envoyée à l'actionneur associé au rail de guidage du balai d'essuyage, qui permet la mise en mouvement du balai d'essuyage le long de la direction de déplacement principal de ce balai d'essuyage et une deuxième sous-instruction envoyée aux buses de projection de sorte à amorcer ou à arrêter la projection de fluide lave-glace. Par exemple, la quantité de fluide lave-glace à projeter peut être déterminée en fonction de l'élément perturbateur détecté, c'est-à-dire en fonction du niveau de salissure de la vitre de protection, ce niveau de salissure étant directement corrélé à la perte d'informations lors de l'acquisition d'images par le capteur d'aide à la conduite protégé par la portion de la vitre de protection à nettoyer. Ainsi, on pourra prévoir la projection d'une quantité de fluide lave-glace minimale, voire nulle, lorsque le seul frottement de la lame d'essuyage contre cette vitre de protection suffit à éliminer l'élément perturbateur et la projection d'une quantité de fluide lave-glace maximale lorsque l'acquisition d'images est totalement empêchée par l'élément perturbateur.

Le détail de la deuxième instruction est identique, à la différence près du sens de déplacement du balai d'essuyage engendré par la première sous-instruction.

Dans le cas où l'unité de contrôle 200 recevrait la première information 210 et la deuxième information 220 simultanément, un ordre de priorité est défini en amont de sorte qu'une seule des deux portions 141, 142 de la vitre de protection 140 soit nettoyée à la fois. Par exemple, la première portion 141 de la vitre de protection 140 sera nettoyée avant la deuxième portion 142 de cette vitre de protection 140, c'est-à-dire qu'on choisit, dans cet exemple, de rendre, en priorité, sa fonction totale et optimale au premier capteur d'aide à la conduite 110, puis, dans un second temps, au deuxième capteur d'aide à la conduite 130.

La présente invention propose ainsi un moyen simple, peu coûteux et efficace qui permet à la fois de protéger des capteurs d'aide à la conduite contre d'éventuelles agressions extérieures et d'assurer le fonctionnement permanent d'au moins l'un de ces capteurs d'aide à la conduite sans lesquels un véhicule autonome, ou partiellement autonome, ne peut fonctionner.

La présente invention ne saurait toutefois se limiter aux moyens et configurations décrits et illustrés ici et elle s'étend également à tout moyen ou configuration équivalent et à toute combinaison techniquement opérante de tels moyens, tels que définies par les revendications.

En particulier la forme et la disposition du premier capteur d'aide à la conduite, du deuxième capteur d'aide à la conduite et du dispositif de nettoyage peuvent être modifiées sans nuire à l'invention telle que définie par les revendications, dans la mesure où elles remplissent les fonctionnalités décrites dans le présent document.

## Revendications

1. Système d'aide à la conduite (100) d'un véhicule automobile, comprenant au moins un module de détection (101) et un dispositif de nettoyage (120), le module de détection (101) comprenant au moins un capteur d'aide à la conduite (110, 130) et au moins une vitre de protection (140) fermant le module de détection (101) et protégeant l'au moins un capteur d'aide à la conduite (110, 130), le dispositif de nettoyage (120) étant configuré pour nettoyer la vitre de protection (140) et le dispositif de nettoyage (120) comprenant au moins un balai d'essuyage (121) au contact de la vitre de protection (140) et mobile le long d'une direction (D) principale de déplacement rectiligne, le module de détection (101) comprenant au moins un premier capteur d'aide à la conduite (110) et au moins un deuxième capteur d'aide à la conduite (130), la vitre de protection (140) protégeant à la fois le premier capteur d'aide à la conduite (110) et le deuxième capteur d'aide à la conduite (130), la vitre de protection (140) comprenant au moins une première portion (141) qui protège le premier capteur d'aide à la conduite (110) et au moins une deuxième portion (142) qui protège le deuxième capteur d'aide à la conduite (130), le dispositif de nettoyage (120) étant configuré pour nettoyer la première portion (141) de la vitre de protection (140) et la deuxième portion (142) de la vitre de protection (140), **caractérisé en ce que** le dispositif de nettoyage (120) est configuré pour nettoyer alternativement la première portion (141) de la vitre de protection (140) et la deuxième portion (142) de cette vitre de protection (140).

2. Système d'aide à la conduite (100) selon la revendication précédente, dans lequel le balai d'essuyage (121) comprend au moins un conduit (123) de distribution d'un fluide lave-glace configuré pour être relié à un réservoir du fluide lave-glace.

3. Système d'aide à la conduite (100) selon l'une quelconque des revendications précédentes, dans lequel la vitre de protection (140) comprend au moins une face intérieure (143) tournée vers l'au moins un capteur d'aide à la conduite (110, 130), cette face intérieure (143) comprenant un revêtement antireflets.

4. Système d'aide à la conduite (100) selon l'une quelconque des revendications précédentes, dans lequel la vitre de protection (140) présente un galbe identique, ou sensiblement identique, à un galbe de l'au moins un capteur d'aide à la conduite (110, 130).

5. Système d'aide à la conduite (100) selon l'une quelconque des revendications précédentes, dans lequel la vitre de protection (140) comprend une jonction entre sa première portion (141) et sa deuxième portion (142), le balai d'essuyage (121) étant apte à prendre une position de repos en regard de ladite jonction.

6. Système d'aide à la conduite (100) selon l'une quelconque des revendications précédentes, dans lequel le balai d'essuyage (121) est apte à nettoyer sélectivement l'une ou l'autre de la première portion (141) ou de la deuxième portion (142) de la vitre de protection (140).

7. Système d'aide à la conduite (100) selon l'une quelconque des revendications précédentes, dans lequel le premier capteur d'aide à la conduite (110) est un organe de détection par émission d'ondes.

8. Système d'aide à la conduite (100) selon la revendication précédente, dans lequel la vitre de protection (140) est perméable au moins aux longueurs d'ondes émises par l'organe de détection (110).

9. Système d'aide à la conduite (100) selon l'une quelconque des revendications précédentes, dans lequel le deuxième capteur d'aide à la conduite (130) est une caméra.

10. Véhicule automobile, comprenant au moins un système d'aide à la conduite (100) selon l'une quelconque des revendications précédentes.

11. Procédé de nettoyage d'un système d'aide à la conduite (100) selon l'une quelconque des revendications 1 à 9, comprenant au moins une étape au cours de laquelle l'au moins un capteur d'aide à la conduite (110, 130) détecte la présence d'un élément perturbateur sur la vitre de protection (140), une étape au cours de laquelle l'au moins un capteur d'aide à la conduite (110, 130) envoie une information (210) correspondante à une unité de contrôle (200), et une étape au cours de laquelle l'unité de contrôle (200) envoie une instruction (211) permettant au dispositif de nettoyage (120) de nettoyer la vitre de protection (140).

12. Procédé de nettoyage d'un système d'aide à la conduite (100) selon l'une quelconque des revendications 1 à 9, comprenant au moins une étape au cours de laquelle une unité de contrôle (200) reçoit une première information (210) envoyée par le premier capteur d'aide à la conduite (110) ou une deuxième information (220) envoyée par le deuxième capteur d'aide à la conduite (130), la première information (210) ou la deuxième information (220) concernant, respectivement, la présence d'un élément perturbateur sur la première portion (141) de la vitre de protection (140) ou sur la deuxième portion (142) de la vitre de protection (140), et une étape au cours de laquelle l'unité de contrôle (200) envoie une première instruction (211) permettant au dispositif de nettoyage (120) de nettoyer la première portion (141) de la vitre de protection (140) si elle a reçu la première information (210) envoyée par le premier capteur d'aide à la conduite (110) ou une deuxième instruction (221) permettant au dispositif de nettoyage (120) de nettoyer la deuxième portion (142) de la vitre de protection (140) si elle a reçu la deuxième information (220) envoyée par le deuxième capteur d'aide à la conduite (130).

## Patentansprüche

1. Fahrerassistenzsystem (100) eines Kraftfahrzeugs, aufweisend mindestens ein Detektionsmodul (101) und eine Reinigungsvorrichtung (120), wobei das Detektionsmodul (101) mindestens einen Fahrerassistenzsensor (110, 130) und mindestens eine das Detektionsmodul (101) verschließende und den mindestens einen Fahrerassistenzsensor (110, 130) schützende Schutzscheibe (140) aufweist, wobei die Reinigungsvorrichtung (120) ausgelegt ist, die Schutzscheibe (140) zu reinigen, und die Reinigungsvorrichtung (120) mindestens einen entlang einer geradlinigen Hauptbewegungsrichtung (D) beweglichen Scheibenwischer (121) in Kontakt mit der Schutzscheibe (140) aufweist, wobei das Detektionsmodul (101) mindestens einen ersten Fahrerassistenzsensor (110) und mindestens einen zweiten Fahrerassistenzsensor (130) aufweist, wobei die Schutzscheibe (140) zur gleichen Zeit den ersten Fahrerassistenzsensor (110) und den zweiten Fahrerassistenzsensor (130) schützt, wobei die Schutzscheibe (140) mindestens einen ersten Abschnitt (141), der den ersten Fahrerassistenzsensor (110) schützt, und mindestens einen zweiten Abschnitt (142) aufweist, der den zweiten Fahrerassistenzsensor (130) schützt, wobei die Reinigungsvorrichtung (120) ausgelegt ist, den ersten Abschnitt (141) der Schutzscheibe (140) und den zweiten Abschnitt (142) der Schutzscheibe (140) zu reinigen,
**dadurch gekennzeichnet, dass** die Reinigungsvorrichtung (120) ausgelegt ist, abwechselnd den ersten Teil (141) der Schutzscheibe (140) und den zweiten Teil (142) dieser Schutzscheibe (140) zu reinigen.

2. Fahrassistenzsystem (100) nach dem vorhergehenden Anspruch, bei dem der Scheibenwischer (121) mindestens eine Leitung (123) zur Verteilung eines Scheibenwaschfluids aufweist, die ausgelegt ist, mit einem Scheibenwaschfluidtank verbunden zu werden.

3. Fahrassistenzsystem (100) nach einem der vorhergehenden Ansprüche, bei dem die Schutzscheibe (140) mindestens eine dem mindestens einen Fahrassistenzsensor (110, 130) zugewandte Innenseite (143) aufweist, wobei diese Innenseite (143) eine Antireflexbeschichtung aufweist.

4. Fahrassistenzsystem (100) nach einem der vorhergehenden Ansprüche, bei dem die Schutzscheibe (140) eine mit einer Rundung des mindestens einen Fahrassistenzsensors (110, 130) identische oder im Wesentlichen identische Rundung aufweist.

5. Fahrassistenzsystem (100) nach einem der vorhergehenden Ansprüche, bei dem die Schutzscheibe (140) eine Verbindung zwischen ihrem ersten Abschnitt (141) und ihrem zweiten Abschnitt (142) aufweist, wobei der Scheibenwischer (121) geeignet ist, eine Ruheposition gegenüber der Verbindung einzunehmen.

6. Fahrassistenzsystem (100) nach einem der vorhergehenden Ansprüche, bei dem der Scheibenwischer (121) geeignet ist, wahlweise den ersten Abschnitt (141) oder den zweiten Abschnitt (142) der Schutzscheibe (140) zu reinigen.

7. Fahrassistenzsystem (100) nach einem der vorhergehenden Ansprüche, bei dem der erste Fahrassistenzsensor (110) ein Wellenemissionsdetektionsorgan ist.

8. Fahrassistenzsystem (100) nach dem vorhergehenden Anspruch, bei dem die Schutzscheibe (140) zumindest für die von dem Detektionsorgan (110) emittierten Wellenlängen durchlässig ist.

9. Fahrassistenzsystem (100) nach einem der vorhergehenden Ansprüche, bei dem der erste Fahrassistenzsensor (130) eine Kamera ist.

10. Kraftfahrzeug, aufweisend mindestens ein Fahrassistenzsystem (100) nach einem der vorhergehenden Ansprüche.

11. Verfahren zur Reinigung eines Fahrerassistenzsystems (100) nach einem der Ansprüche 1 bis 9, aufweisend mindestens einen Schritt, im Zuge dessen der mindestens eine Fahrassistenzsensor (110, 130) das Vorhandensein eines Störelements auf der Schutzscheibe (140) detektiert, einen Schritt, im Zuge dessen der mindestens eine Fahrassistenzsensor (110, 130) eine entsprechende Information (210) an eine Steuereinheit (200) sendet, und einen Schritt, im Zuge dessen die Steuereinheit (200) eine Anweisung (211) sendet, die es der Reinigungsvorrichtung (120) ermöglicht, die Schutzscheibe (140) zu reinigen.

12. Verfahren zur Reinigung eines Fahrerassistenzsystems (100) nach einem der Ansprüche 1 bis 9, aufweisend mindestens einen Schritt, im Zuge dessen eine Steuereinheit (200) eine von dem ersten Fahrassistenzsensor (110) gesendete erste Information (210) oder eine von dem zweiten Fahrassistenzsensor (130) gesendete zweite Information (220) erhält, wobei die erste Information (210) oder die zweite Information (220) jeweils das Vorhandensein eines Störelements auf dem ersten Abschnitt (141) der Schutzscheibe (140) oder auf dem zweiten Abschnitt (142) der Schutzscheibe (140) betrifft, und einen Schritt, im Zuge dessen die Steuereinheit (200) eine erste Anweisung (211), die es der Reinigungsvorrichtung (120) ermöglicht, den ersten Abschnitt (141) der Schutzscheibe (140) zu reinigen, falls sie die erste Information (210) von dem ersten Fahrassistenzsensor (110) erhalten hat, oder eine zweite Anweisung (221) sendet, die es der Reinigungsvorrichtung (120) ermöglicht, den zweiten Abschnitt (142) der Schutzscheibe (140) zu reinigen, falls sie die zweite Information (220) von dem zweiten Fahrassistenzsensor (130) erhalten hat.

## Claims

1. Motor vehicle driver assistance system (100) comprising at least a detection module (101) and a cleaning device (120), the detection module (101) comprising at least one driver assistance sensor (110, 130) and at least a protective window (140) closing the detection module (101) and protecting the at least one driver assistance sensor (110, 130), the cleaning device (120) being configured to clean the protective window (140) and the cleaning device (120) comprising at least one wiper (121) in contact with the protective window (140) and able to move in a rectilinear main direction of travel (D), the detection module (101) comprising at least a first driver assistance sensor (110) and at least a second driver assistance sensor (130), the protective window (140) protecting both the first driver assistance sensor (110) and the second driver assistance sensor (130), the protective window (140) comprising at least a first portion (141) which protects the first driver assistance sensor (110) and at least a second portion (142) which protects the second driver assistance sensor (130), the cleaning device (120) being configured to clean the first portion (141) of the protective window (140) and the second portion (142) of the protective window (140), **characterized in that** the cleaning device (120) is configured to clean the first portion (141) of the protective window (140) and the second portion (142) of this protective window (140) alternately.

2. Driver assistance system (100) according to the preceding claim, wherein the wiper (121) comprises at least one washer fluid distribution duct (123) configured to be connected to a washer fluid reservoir.

3. Driver assistance system (100) according to either one of the preceding claims, wherein the protective window (140) comprises at least an interior face (143) facing towards the at least one driver assistance sensor (110, 130), this interior face (143) comprising an antireflection coating.

4. Driver assistance system (100) according to any one of the preceding claims, wherein the protective window (140) has a curvature identical, or nearly identical, to a curvature of the at least one driver assistance sensor (110, 130).

5. Driver assistance system (100) according to any one of the preceding claims, wherein the protective window (140) has a junction between its first portion (141) and its second portion (142), the wiper (121) being able to adopt a parked position facing said junction.

6. Driver assistance system (100) according to any one of the preceding claims, wherein the wiper (121) is able selectively to clean one or the other of the first portion (141) and second portion (142) of the protective window (140) .

7. Driver assistance system (100) according to any one of the preceding claims, wherein the first driver assistance sensor (110) is a detection member using wave emission.

8. Driver assistance system (100) according to the preceding claim, wherein the protective window (140) is permeable at least to the wavelengths emitted by the detection member (110).

9. Driver assistance system (100) according to any one of the preceding claims, wherein the second driver assistance sensor (130) is a camera.

10. Motor vehicle comprising at least one driver assistance system (100) according to any one of the preceding claims.

11. Method for cleaning a driver assistance system (100) according to any one of Claims 1 to 9, comprising at least a step during which the at least one driver assistance sensor (110, 130) detects the presence of a disruptive element on the protective window (140), a step during which the at least one driver assistance sensor (110, 130) issues a corresponding item of information (210) to a control unit (200), and a step during which the control unit (200) issues an instruction (211) allowing the cleaning device (120) to clean the protective window (140).

12. Method for cleaning a driver assistance system (100) according to any one of Claims 1 to 9, comprising at least a step during which a control unit (200) receives a first item of information (210) issued by the first driver assistance sensor (110) or a second item of information (220) issued by the second driver assistance sensor (130), the first item of information (210) or the second item of information (220) relating, respectively, to the presence of a disruptive element on the first portion (141) of the protective window (140) or on the second portion (142) of the protective window (140), and a step during which the control unit (200) issues a first instruction (211) allowing the cleaning device (120) to clean the first portion (141) of the protective window (140) if it has received the first item of information (210) issued by the first driver assistance sensor (110) or a second instruction (221) allowing the cleaning device (120) to clean the second portion (142) of the protective window (140) if it has received the second item of information (220) issued by the second driver assistance sensor (130).
